# EUROPEAN PATENT APPLICATION

(11) **EP 4 617 940 A1**
(43) Date of publication of application: **17.09.2025**
(21) Application number: 25160135.7
(22) Date of filing: 26.02.2025
(51) Int. Cl.: G06F 30/23, B22F 10/80, B29C 64/386, B33Y 50/00

(54) **INFORMATION PROCESSING METHOD, INFORMATION PROCESSING APPARATUS, CARRIER MEANS, AND OBJECT MANUFACTURING METHOD**

(30) Priority: 13.03.2024 JP 2024039278
(71) Applicant: Ricoh Company, Ltd., Tokyo 143-8555 (JP)
(72) Inventor: Hayakawa, Shota, Tokyo, 143-8555 (JP); Tsuji, Masato, Tokyo, 143-8555 (JP); Ito, Yoichi, Tokyo, 143-8555 (JP)
(74) Representative: SSM Sandmair

(57) **Abstract**

An information processing method includes estimating (S2) deformation of an object that is likely to occur during manufacturing of the object to obtain a first estimation result, the object including a unit structure, estimating (S3) performance of the object that is likely to be exhibited during use of the object to obtain a second estimation result, and determining (S4) design information of the object based on a first estimation result and a second estimation result.

## Description

### BACKGROUND

### Technical Field

The present disclosure relates to an information processing method, an information processing apparatus, and an object manufacturing method.

### Related Art

There is a technique for estimating the deformation of an object, such as a fabrication object. For example, Japanese Unexamined Patent Application Publication No. 2016-175404 discloses an additive manufacturing method for modifying design data of a fabrication component based on deformation parameters extracted from a result of thermal stress analysis.

However, background techniques have a room for improvement in the accuracy of the modification of the design data. For example, the technique disclosed in Japanese Unexamined Patent Application Publication No. 2016-175404 does not take into account the deformation or performance of a fabrication object that is likely to be exhibited during the use of the fabrication object.

### SUMMARY

According to an embodiment of the present disclosure, an information processing method includes estimating deformation of an object that is likely to occur during manufacturing of the object to obtain a first estimation result, the object including a unit structure, estimating performance of the object that is likely to be exhibited during use of the object to obtain a second estimation result, and determining design information of the object based on the first estimation result and the second estimation result.

According to an embodiment of the present disclosure, an information processing apparatus includes a first estimation unit configured to estimate deformation of an object that is likely to occur during manufacturing of the object to obtain a first estimation result, the object including a unit structure; a second estimation unit configured to estimate performance of the object that is likely to be exhibited during use of the object to obtain a second estimation result; and a determination unit configured to determine design information of the object based on the first estimation result and the second estimation result.

According to an embodiment of the present disclosure, an object manufacturing method includes estimating deformation of an object that is likely to occur during manufacturing of the object to obtain a first estimation result, the object including a unit structure, estimating performance of the object that is likely to be exhibited during use of the object to obtain a second estimation result, determining design information of the object based on the first estimation result and the second estimation result, repeating a formation process and an application process to fabricate the object, and sintering the object. The formation process includes forming a powder layer including powder based on design data including the design information of the object. The application process includes applying fabrication liquid to the powder layer.

According to the above-described embodiments of the present disclosure, design information of an object is determined with high accuracy.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a block diagram illustrating an example of an overall configuration of an information processing system;
FIG. 2 is a schematic configuration diagram illustrating an example of a fabrication apparatus;
FIG. 3 is a block diagram illustrating an example of a hardware configuration of a computer;
FIG. 4 is a block diagram illustrating an example of a functional configuration of an information processing apparatus;
FIG. 5 is a diagram illustrating examples of an object;
FIG. 6 is a view illustrating an example of a stress distribution during the sintering of an object;
FIGS. 7A and 7B are views each illustrating an example of a stress distribution during the use of an object;
FIG. 8 is a diagram illustrating examples of a grid structure;
FIG. 9 is a diagram illustrating examples of a curved surface structure;
FIG. 10 is a flowchart illustrating an example of an information processing method according to a first embodiment;
FIG. 11 is a flowchart illustrating an example of a manufacturing method;
FIG. 12 is a flowchart illustrating an example of an information processing method according to a second embodiment;
FIG. 13 is a flowchart illustrating an example of an information processing method according to a third embodiment;
FIG. 14 is a flowchart illustrating an example of an information processing method according to a fourth embodiment;
FIG. 15 is a diagram illustrating examples of a stress distribution according to the fourth embodiment;
FIG. 16 is a diagram illustrating examples of an object according to the fourth embodiment; and
FIG. 17 is a table illustrating examples of a performance evaluation result according to the fourth embodiment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

### First Embodiment

In one embodiment, an information processing system determines information regarding an object to be manufactured using a manufacturing system. The information regarding the object may include, for example, design information indicating the design of the object. The design information may include, for example, information indicating the shape of the object, the material of the object, and the structure of the object. The design information may include design information regarding a partial structure that is part of the object.

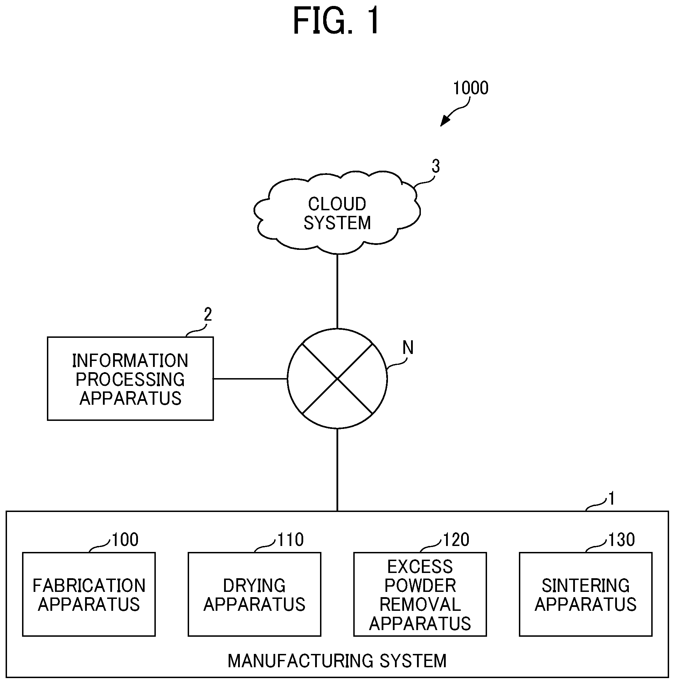

FIG. 1 is a block diagram illustrating an example of an overall configuration of an information processing system 1000. As illustrated in FIG. 1, the information processing system 1000 includes a manufacturing system 1, an information processing apparatus 2, and a cloud system 3. The manufacturing system 1, the information processing apparatus 2, and the cloud system 3 are connected to a communication network N to communicate with each other via the communication network N.

The communication network N includes a wired communication network such as the Internet, a local area network (LAN), or a wide area network (WAN). In addition to the wired communication network, the communication network N may also include a wireless communication network such as a wireless LAN or short-range wireless communication, and a mobile communication network such as worldwide interoperability for microwave Access (WiMAX), long term evolution (LTE), or 5th generation (5G).

The manufacturing system 1 is a system for manufacturing an object. The manufacturing system 1 may be any of various systems. For example, the manufacturing system 1 may be a fabrication system, a casting system, or a rolling system. For example, the manufacturing system 1 may employ, as the fabrication system, a binder jetting (BJ) method, a high-speed sintering (HSS) method, a selective laser sintering (SLS) method, a selective laser melting (SLM) method, a material jetting (MJ) method, or a stereolithography apparatus (SLA) method. In the present embodiment, as an example, the manufacturing system 1 is the fabrication system based on the BJ method.

The manufacturing system 1 includes a fabrication apparatus 100, a drying apparatus 110, an excess powder removal apparatus 120, and a sintering apparatus 130. The fabrication apparatus 100 fabricates a fabrication object, which is an example of an object. The drying apparatus 110 dries the fabrication object fabricated by the fabrication apparatus 100. The excess powder removal apparatus 120 removes excess powder adhering to the fabrication object dried by the drying apparatus 110. The sintering apparatus 130 sinters the fabrication object from which excess powder has been removed. The sintering apparatus 130 may degrease the fabrication object before sintering the fabrication object.

The manufacturing system 1 may include the fabrication apparatus 100, the drying apparatus 110, the excess powder removal apparatus 120, and the sintering apparatus 130 as four separate apparatuses including different housings. Alternatively, the manufacturing system 1 may include the fabrication apparatus 100, the drying apparatus 110, the excess powder removal apparatus 120, and the sintering apparatus 130 as a single integrated apparatus. In the manufacturing system 1, at least part of the functions of the drying apparatus 110 or the excess powder removal apparatus 120 may be included in the fabrication apparatus 100 or the sintering apparatus 130. In the manufacturing system 1, at least part of the functions of the drying apparatus 110 or the excess powder removal apparatus 120 may be omitted as appropriate.

The information processing apparatus 2 is an example of an information processing apparatus that generates design data of an object. One example of the information processing apparatus 2 is a computer such as a personal computer, a workstation, or a server. The information processing apparatus 2 receives an input of shape data of an object and outputs design data to be used when the manufacturing system 1 manufactures the object. The design data output from the information processing apparatus 2 is input to the manufacturing system 1. The manufacturing system 1 manufactures the object based on the input design data.

The design data is electronic data that includes design information indicating the design of the object. The shape data is electronic data that indicates the shape of the object. The shape data may be design data generated in the past. In other words, the information processing apparatus 2 may modify the design data generated in the past.

The cloud system 3 is an example of an information processing system that provides a cloud service via the communication network N. The cloud system 3 may be implemented by one or more information processing apparatuses. In one example, the cloud service may be a cloud storage service or an application service. The cloud system 3 may provide part of the functions to be executed by the manufacturing system 1 or the information processing apparatus 2 as the cloud service. When the manufacturing system 1 or the information processing apparatus 2 executes all of the functions, the cloud system 3 is not necessarily included in the information processing system 1000.

The overall configuration of the information processing system 1000 illustrated in FIG. 1 is merely an example, and the information processing system 1000 may have any of various other system configurations that match the application or purpose. For example, in the information processing system 1000, the number of manufacturing systems 1, the number of information processing apparatuses 2, and the number of cloud systems 3 may be one or more each. For example, the information processing apparatus 2 may be implemented by a plurality of computers. Alternatively, the information processing apparatus 2 may be implemented as a cloud computing service. For example, the information processing apparatus 2 may be incorporated in any of the apparatuses included in the manufacturing system 1. The classification of the apparatuses or system such as the manufacturing system 1, the information processing apparatus 2, and the cloud system 3 illustrated in FIG. 1 is merely an example.

### Schematic Configuration of Fabrication Apparatus

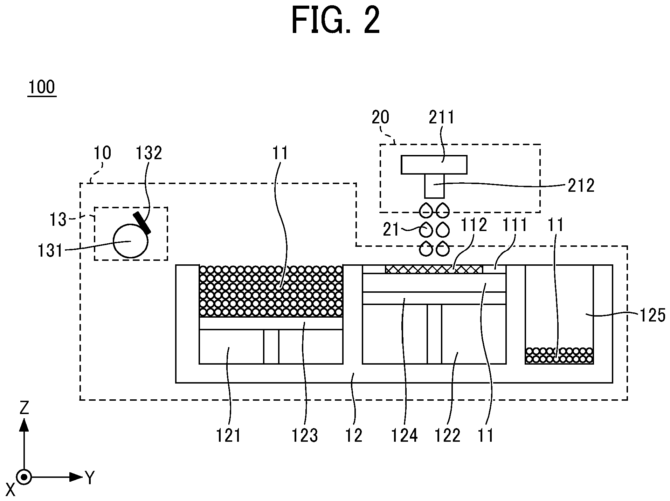

FIG. 2 is a schematic configuration diagram illustrating an example of the fabrication apparatus 100. As illustrated in FIG. 2, the fabrication apparatus 100 according to the present embodiment includes a fabrication device 10 and an application device 20.

The fabrication device 10 fabricates a powder layer 111, which includes powder 11. The application device 20 applies fabrication liquid 21 to the powder layer 111 to form a fabrication layer 112. Specifically, the fabrication apparatus 100 laminates a plurality of fabrication layers 112 to fabricate a fabrication object. Hereinafter, the plurality of fabrication layers 112 may be collectively referred to as the "fabrication layer 112."

The powder 11 may include at least aluminum or an aluminum alloy. The powder 11 may be at least one selected from aluminum, zinc, magnesium, and an alloy thereof. The powder 11 may include a material, such as ceramic, other than metal.

The fabrication device 10 includes a powder tank 12 and a layering device 13. The powder tank 12 includes a supply tank 121, a fabrication tank 122, a supply stage 123, a fabrication stage 124, and an excess powder tank 125. The powder tank 12 has a box shape. The supply tank 121, the fabrication tank 122, and the excess powder tank 125 have open top faces. The layering device 13 includes a flattening device 131 and a powder remover 132.

The supply tank 121 is a tank that supplies the powder 11 to the fabrication tank 122. The supply tank 121 stores the powder 11 to be supplied to the fabrication tank 122. The supply stage 123 is disposed at a bottom of the supply tank 121. The supply stage 123 moves up and down in a vertical direction (Z direction). The supply stage 123 is disposed such that a side surface of the supply stage 123 is in contact with an inner side surface of the supply tank 121.

The fabrication tank 122 receives the powder 11 to be used for fabrication from the supply tank 121. In the fabrication tank 122, the powder layer 111 and the fabrication layer 112 are formed. Further, in the fabrication tank 122, a plurality of fabrication layers 112 is laminated to fabricate a fabrication object. The fabrication stage 124 is disposed at a bottom of the fabrication tank 122. The fabrication stage 124 moves up and down in the vertical direction (Z direction). The fabrication stage 124 is disposed such that a side surface of the fabrication stage 124 is in contact with an inner side surface of the fabrication tank 122. Top faces of the supply stage 123 and the fabrication stage 124 are kept horizontal.

The excess powder tank 125 is a tank that stores excess powder 11 among the powder 11 that has been flattened by the flattening device 131 during the formation of the powder layer 111. The excess powder tank 125 may include, at its bottom, means for suctioning the powder 11 or means for removing the excess powder tank 125. The excess powder tank 125 is disposed next to the fabrication tank 122. The excess powder 11 stored in the excess powder tank 125 may be returned to the supply tank 121.

The excess powder 11 may be returned to the supply tank 121 via a powder supply device. The powder supply device may be disposed at the top of, or above the supply tank 121. The powder supply device may supply the excess powder 11 to the supply tank 121 before fabrication starts or when the amount of powder 11 in the supply tank 121 decreases. Although the powder tank 12 includes the three tanks, namely the supply tank 121, the fabrication tank 122, and the excess powder tank 125 in FIG. 2, the powder tank 12 may omit the supply tank 121 and include the fabrication tank 122 and the excess powder tank 125. In this case, the excess powder tank 125 may supply the excess powder 11 to the fabrication tank 122 via the powder supply device. The powder supply device may employ a screw conveyor system using a screw or an air conveyance system using air to convey the excess powder 11 from the excess powder tank 125 to the supply tank 121.

The flattening device 131 flattens the fabrication layer 112 or the powder layer 111. The flattening device 131 rotates a recoater as a rotating body to flatten the fabrication layer 112. The flattening device 131 drivingly rotates to supply the powder 11 from the supply stage 123 of the supply tank 121 to the fabrication tank 122. The flattening device 131 reciprocates in a Y direction along a stage surface of the fabrication stage 124. The stage surface is a surface on which the powder 11 is stacked. With this configuration, the powder layer 111 is formed in the fabrication layer 112.

Specifically, the flattening device 131 moves horizontally from the outside of the supply tank 121 and then passes over the top of the supply tank 121 and the fabrication tank 122 so that the powder 11 in the supply tank 121 is moved and supplied to the fabrication tank 122. Further, the flattening device 131 flattens the powder 11 while passing over the top of the fabrication tank 122. This creates the powder layer 111 in the fabrication tank 122. The flattening device 131 is a component that is longer than an internal dimension of the fabrication tank 122 and the supply tank 121. The flattening device 131 may be a plate-like device and include a blade or a bar.

The powder remover 132 removes powder that has adhered to the flattening device 131. The powder remover 132 keeps in contact with a circumference of the flattening device 131 while moving together with the flattening device 131.

The application device 20 includes a carriage 211 and a head 212. The head 212 applies the fabrication liquid 21 to the powder layer 111. The head 212 is, for example, an inkjet head, and includes a nozzle array in which a plurality of nozzles is arranged in a row. The head 212 may apply cyan fabrication liquid, magenta fabrication liquid, yellow fabrication liquid, and black fabrication liquid to the powder layer 111 to form a colored fabrication object. Alternatively, the head 212 may apply fabrication liquid of a single color to the powder layer 111 from a corresponding one of the plurality of nozzles to form a monochromatic fabrication object. The head 212 may apply the fabrication liquid 21 by an inkjet method or a dispenser method.

At least one head 212 is mounted on the carriage 211 and is driven by a motor to reciprocate in an X direction (main scanning), the Y direction (sub-scanning), and the Z direction with the support of, for example, a guide member.

### Hardware Configuration of Information Processing Apparatus

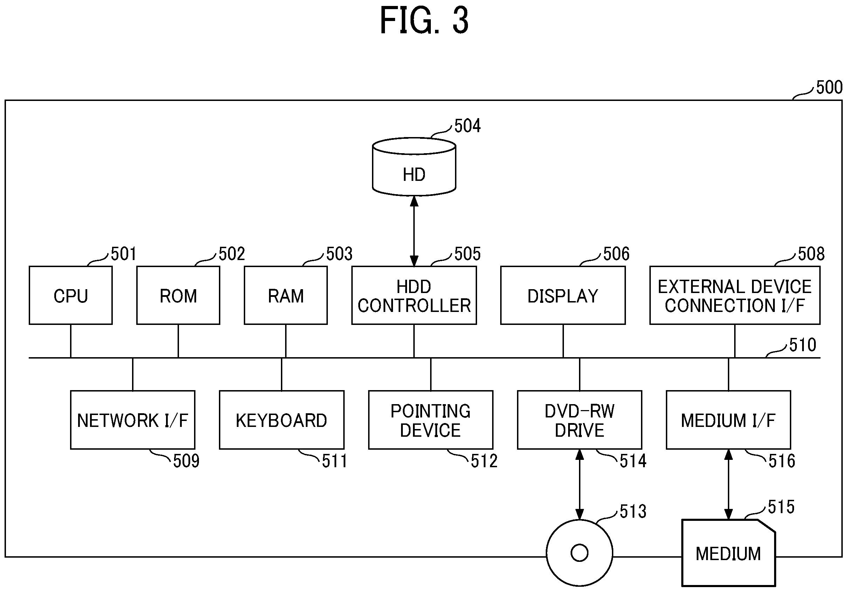

FIG. 3 is a block diagram illustrating an example of a hardware configuration of a computer 500. The information processing apparatus 2 according to the present embodiment may be implemented by the computer 500.

As illustrated in FIG. 3, the computer 500 includes a central processing unit (CPU) 501, a read-only memory (ROM) 502, a random-access memory (RAM) 503, a hard disk (HD) 504, a hard disk drive (HDD) controller 505, a display 506, an external device connection interface (IF) 508, a network I/F 509, a bus line 510, a keyboard 511, a pointing device 512, a digital versatile disk rewritable (DVD-RW) drive 514, and a medium I/F 516.

The CPU 501 controls the operation of the computer 500. The ROM 502 stores programs such as an initial program loader (IPL) for executing the CPU 501. The RAM 503 is used as a work area for the CPU 501. The HD 504 stores various data such as programs. The HDD controller 505 controls the reading and writing of various data from and to the HD 504 under the control of the CPU 501.

The display 506 displays various pieces of information such as a cursor, menus, windows, characters, and images. The external device connection I/F 508 is an interface for connecting various external devices. The external devices include, for example, a universal serial bus (USB) memory and a printer. The network I/F 509 is an interface for data communication via the communication network N. The bus line 510 includes an address bus and data bus that electrically connects components such as the CPU 501 to each other.

The keyboard 511 is an example of an input device including a plurality of keys for inputting, for example, characters, numerical values, and various instructions. The pointing device 512 is an example of an input device that allows the user to select or execute various instructions, select a target to be processed, and move a cursor being displayed. The DVD-RW drive 514 controls reading and writing of various data from and to a DVD-RW 513, which is an example of a detachable recording medium. The DVD-RW drive 514 may control reading and writing of various data from and to a DVD-R without limiting to the DVD-RW 513. The medium I/F 516 controls reading and writing (storing) of data from and to a recording medium 515 such as a flash memory.

### Functional Configuration of Information Processing Apparatus

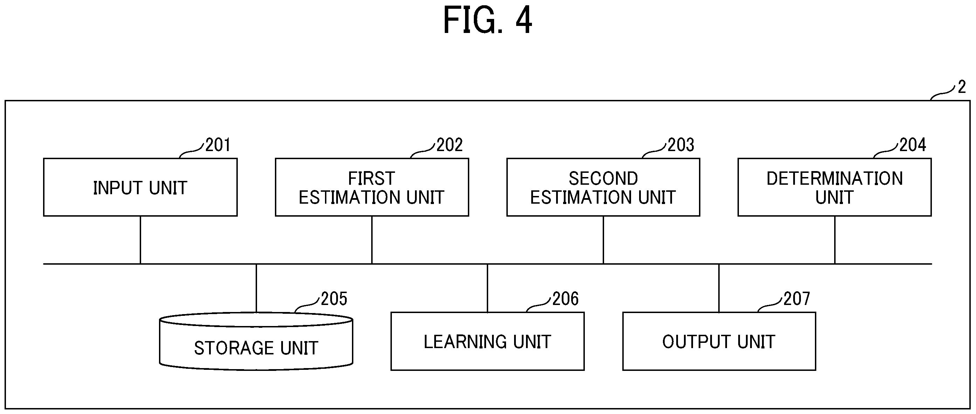

FIG. 4 is a block diagram illustrating an example of a functional configuration of the information processing apparatus 2. As illustrated in FIG. 4, the information processing apparatus 2 according to the present embodiment includes an input unit 201, a first estimation unit 202, a second estimation unit 203, a determination unit 204, a storage unit 205, a learning unit 206, and an output unit 207.

The input unit 201, the first estimation unit 202, the second estimation unit 203, the determination unit 204, the learning unit 206, and the output unit 207 are, for example, implemented by processing executed by the CPU 501 and the network I/F 509 according to a program loaded from the ROM 502 to the RAM 503 illustrated in FIG. 3.

The storage unit 205 is implemented using, for example, the HD 504 illustrated in FIG. 3. Reading or writing of data stored on the HD 504 is performed under the control of the HDD controller 505, for example.

The input unit 201 receives an input of shape data indicating the shape of an object. For example, the input unit 201 may read shape data stored on the recording medium 515 via the medium I/F 516. Alternatively, the input unit 201 may receive shape data transmitted from an external information processing apparatus via the network I/F 509. The "external information processing apparatus" indicates an information processing apparatus that is not included in the information processing system 1000.

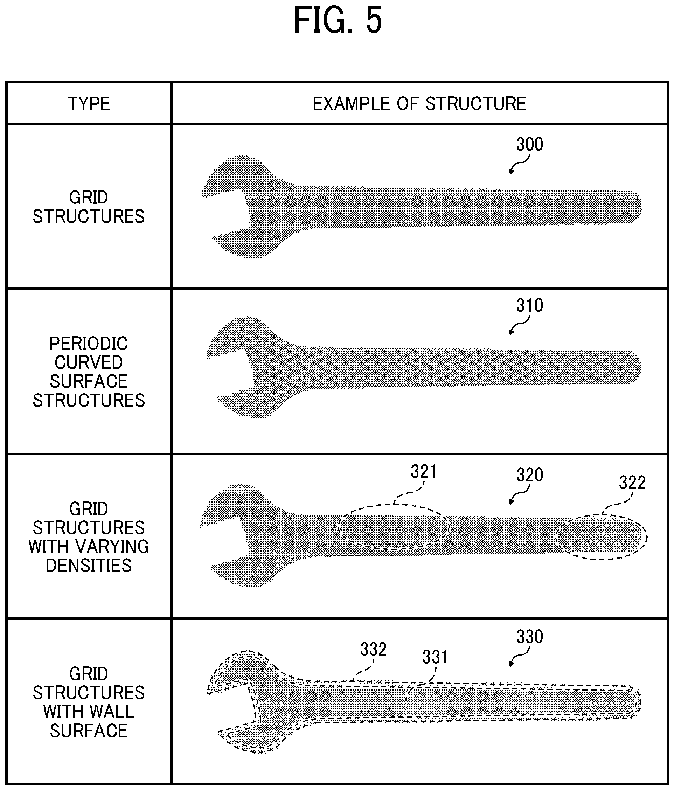

An object includes at least a unit structure. The unit structure refers to, for example, a grid structure or a curved surface structure. An object may include a partial structure in which a plurality of unit structures is coupled to each other. The partial structure may include a plurality of unit structures of different types. The partial structure may include a plurality of unit structures of the same type but with different densities. An object may include a plurality of partial structures with different unit structures. An object may include a plurality of partial structures including a partial structure in which unit structures are coupled to each other and a partial structure in which unit structures are not coupled to each other. Examples of an object are described below with reference to FIG. 5.

FIG. 5 is a diagram illustrating examples of an object. Each of objects 300, 310, 320, and 330 illustrated in FIG. 5 includes at least a unit structure. Specifically, the object 300 includes grid structures as unit structures. The object 310 includes curved surface structures as unit structures. The object 320 includes, as unit structures, grid structures with varying densities. The object 330 includes, as unit structures, grid structures with a wall surface. Although the objects 300, 310, 320, and 330 are illustrated as wrenches in FIG. 5 as an example, the objects 300, 310, 320, and 330 may be any other products. Further, although the following description also takes a wrench as an example of an object, the object may be any other product.

The object 300 includes grid structures as unit structures. The object 300 includes a partial structure in which a plurality of grid structures is coupled to each other. An example of a grid structure includes a lattice structure. The lattice structure has a three-dimensional shape in which branched lattices are periodically arranged.

The object 310 includes curved surface structures as unit structures. The object 310 includes a periodic curved surface structure, in which curved surface structures are periodically arranged. The object 310 includes a partial structure in which a plurality of unit structures is coupled to each other. An example of a curved surface structure includes a gyroid structure. The gyroid structure is infinitely couplable in three directions and has a periodic minimal surface that divides a space into two regions.

The object 320 includes grid structures as unit structures. The object 320 includes a partial structure in which a plurality of grid structures is coupled to each other. Unlike the object 300, the object 320 includes a plurality of partial structures including grid structures with different densities. The object 320 includes a partial structure 321 with a high density and a partial structure 322 with a low density. The density is the mass per unit volume. In one example, changing at least one of the number of unit structures per unit volume and the thickness of each unit structure varies the mass per unit volume.

The object 330 includes grid structures as unit structures. The object 330 includes a partial structure in which a plurality of grid structures is coupled to each other. Unlike the objects 300 and 320, the object 330 includes a partial structure in which unit structures are not coupled to each other. The object 330 includes a partial structure 331 in which a plurality of unit structures is coupled to each other and a partial structure 332 in which unit structures are not coupled to each other. In one example, the partial structure 332 in which the unit structures are not coupled to each other may be a wall surface forming an outer edge of the object 330. The partial structure 332 in which the unit structures are not coupled to each other may be any part of the object without limiting to the wall surface of the object 330.

Referring back to FIG. 4, the first estimation unit 202 estimates the deformation of an object that is likely to occur during the manufacturing of the object. The object includes at least a unit structure. Specifically, the first estimation unit 202 estimates, based on the shape data received from the input unit 201, the deformation of an object that is likely to occur during the manufacturing of the object. The first estimation unit 202 may obtain a stress distribution during the sintering of the object based on the shape data to estimate the deformation of the object that is likely to occur during the manufacturing of the object. The first estimation unit 202 may obtain a stress distribution indicating a maximum principal stress during the sintering of the object to estimate the deformation of the object that is likely to occur during the manufacturing of the object. The first estimation unit 202 may estimate, based on a learned model generated by the learning unit 206, the deformation of the object that is likely to occur during the manufacturing of the object.

The stress distribution during the sintering of the object may be a stress distribution when powder, which is a material of the object, includes aluminum or an aluminum alloy. The stress distribution during the sintering of the object may be a stress distribution in a temperature range in which at least part of aluminum is in a liquid phase.

The stress distribution during the sintering of the object may be obtained using simulation software that performs a sintering simulation. In one example, the simulation software may perform a sintering simulation with a material of the object and a sintering temperature specified based on the shape data to calculate a stress distribution during the sintering of the object. When powder includes aluminum or an aluminum alloy as the material of the object, the simulation software may calculate a stress distribution during the sintering of the object with the aluminum or aluminum alloy specified as the material of the object in a sintering simulation. To calculate a stress distribution in a temperature range in which at least part of aluminum is in the liquid phase, the simulation software may perform a sintering simulation with a sintering temperature set to the temperature range in which at least part of aluminum is in the liquid phase.

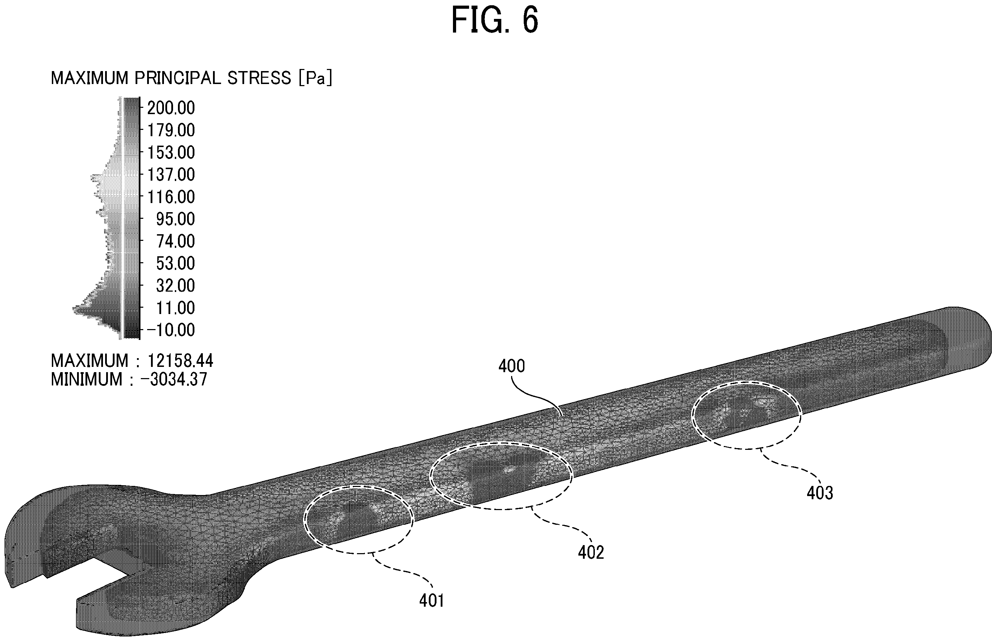

The first estimation unit 202 may obtain a stress distribution during the sintering of the object by performing a sintering simulation using the simulation software that has been pre-installed in the information processing apparatus 2. The first estimation unit 202 may obtain a stress distribution during the sintering of the object as a result of a sintering simulation performed by an external apparatus or system such as the cloud system 3. A stress distribution during the sintering of an object is described with reference to FIG. 6.

FIG. 6 is a view illustrating an example of a stress distribution during the sintering of an object 400. As illustrated in FIG. 6, the stress distribution during the sintering of the object 400 is data indicating the distribution of the maximum principal stress on a surface of the object 400 during sintering. The stress distribution illustrated in FIG. 6 indicates regions 401, 402, and 403 where the maximum principal stress is particularly high. The regions 401, 402, and 403 where the maximum principal stress is particularly high are regions subjected to high tensile stress and thereby deformed significantly during sintering.

Referring back to FIG. 4, the second estimation unit 203 estimates the performance of the object that is likely to be exhibited during the use of the object. The second estimation unit 203 receives the shape data from the input unit 201. The second estimation unit 203 may perform a structural analysis simulation based on the shape data and obtain a stress distribution during the use of the object. The second estimation unit 203 may obtain a stress distribution during the use of the object to estimate the performance of the object that is likely to be exhibited during the use of the object. The second estimation unit 203 may estimate the performance of the object that is likely to be exhibited during the use of the object based on a learned model generated by the learning unit 206.

The performance of the object during the use of the object may be selected as desired according to the application of the object. As an example, the performance of the object during the use of the object may include the deformation of the object under a load during the use of the object. When the object is an object through which fluid passes, the performance of the object during the use of the object may include a pressure loss or a thermal resistance. In the present embodiment, as an example, the second estimation unit 203 estimates the deformation of the object as the performance of the object during the use of the object.

The stress distribution during the use of the object may be calculated using simulation software that performs a structural analysis simulation. As an example, the simulation software may perform a structural analysis simulation to calculate a stress distribution during the use of the object by setting, based on the shape data, a load that is assumed to be applied to the object during the use of the object and a constraint condition.

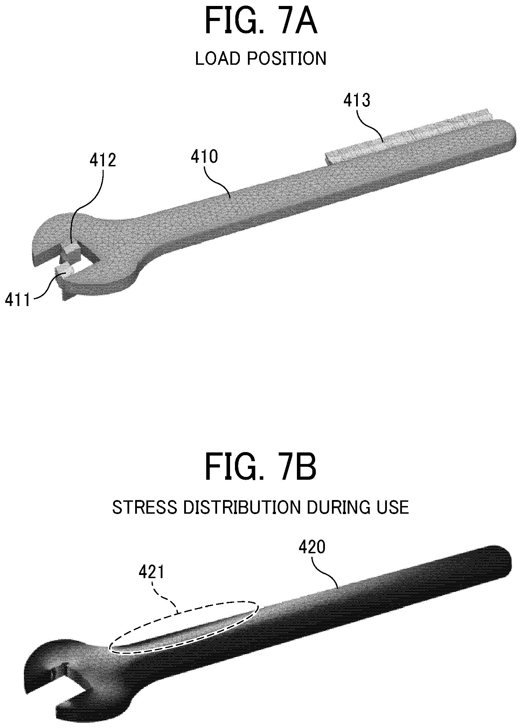

The second estimation unit 203 may obtain a stress distribution during the use of the object by performing a structural analysis simulation using the simulation software that has been pre-installed in the information processing apparatus 2. The second estimation unit 203 may obtain a stress distribution during the use of the object as a result of a structural analysis simulation performed by an external apparatus or system such as the cloud system 3. A stress distribution during the use of an object is described with reference to FIGS. 7A and 7B.

FIGS. 7A and 7B are views each illustrating an example of a stress distribution during the use of an object. Specifically, FIG. 7A illustrates positions at which a load is applied to an object 410. FIG. 7B illustrates a stress distribution during the use of an object 420. In this example, the objects 410 and 420 are wrenches. The object 410 includes bores 411 and 412 and a gripping section 413. The bores 411 and 412 fit to a nut or a bolt. The gripping section 413 is gripped by a user to apply a rotational force. In a structural analysis simulation, a load is applied to the bores 411 and 412 and the gripping section 413 to calculate a stress distribution during the use of the object 410.

The stress distribution during the use of the object is data indicating a distribution of a maximum principal stress on a surface of the object during the use of the object. The stress distribution illustrated in FIG. 7B indicates a region 421 where the maximum principal stress is particularly high. The region 421 where the maximum principal stress is particularly high is a region to which a high tensile stress is applied during the use of the object 420, causing significant deformation during the use of the object.

The sintering simulation and the structural analysis simulation may be performed using the same simulation software that performs a plurality of types of simulations. The sintering simulation and the structural analysis simulation may be performed using different simulation software.

Referring back to FIG. 4, the determination unit 204 determines the design information of the object based on a first estimation result obtained by the first estimation unit 202 and a second estimation result obtained by the second estimation unit 203. The design information may include at least one of the thickness and the density of each unit structure.

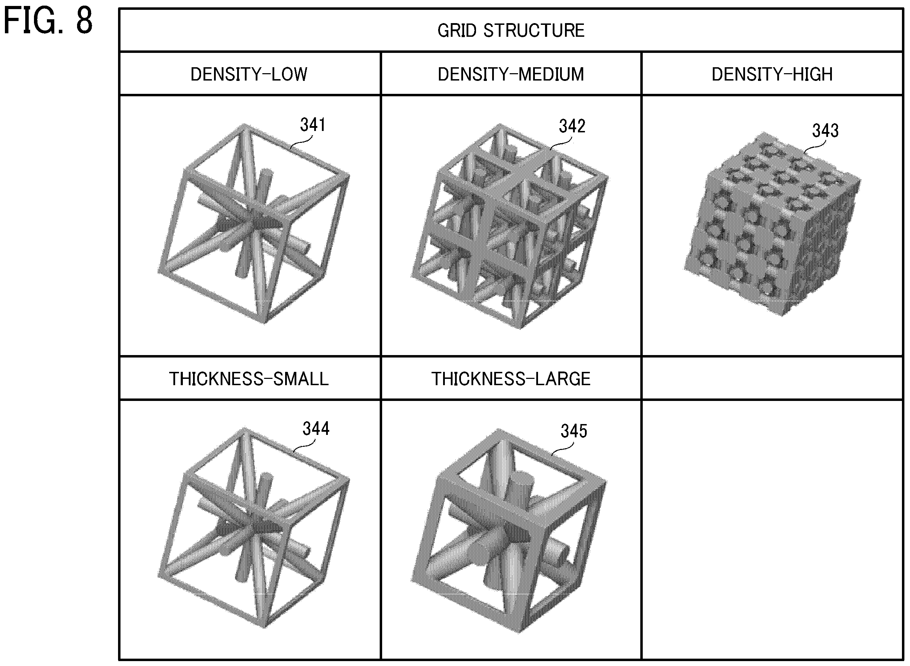

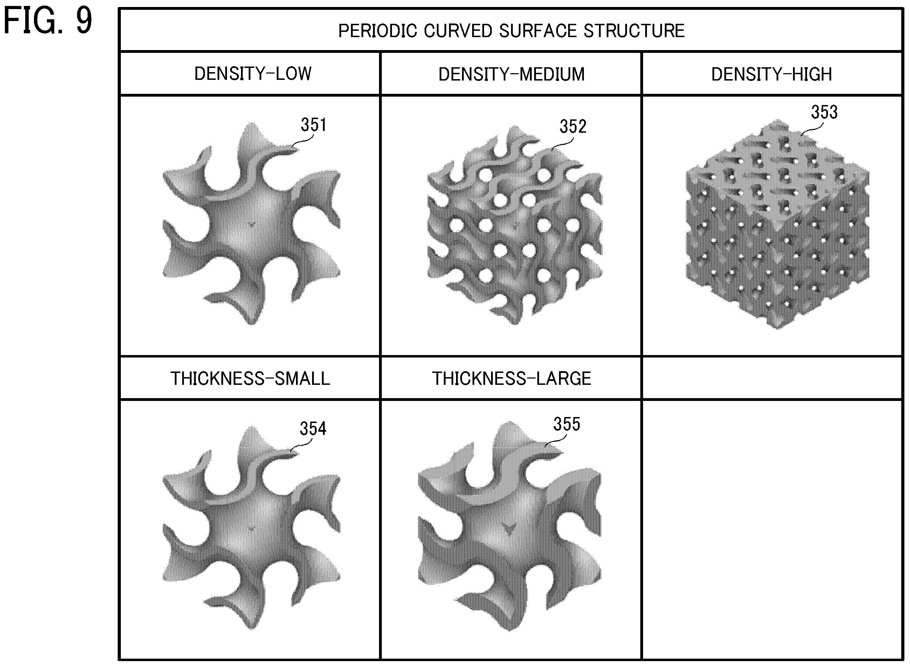

As an example, the determination unit 204 may determine, based on the first estimation result, a region where deformation is likely to occur during the manufacturing of the object. The determination unit 204 may determine, based on the second estimation result, a region where deformation is likely to occur during the use of the object. The determination unit 204 may determine at least one of the thickness and the density of each unit structure so as to increase the strength of the region where deformation is likely to occur during the manufacturing or the use of the object. Examples of how the thickness or density of each unit structure having a grid structure or a curved surface structure is determined are described with reference to FIGS. 8 and 9.

FIG. 8 is a diagram illustrating examples of the grid structure. Specifically, FIG. 8 illustrates grid structures with different densities and thicknesses as an example.

Grid structures 341, 342, and 343 have low, medium, and high densities, respectively. Increasing the density of a grid structure increases the mass per unit volume, thereby increasing the strength of the grid structure.

A grid structure 344 includes a predetermined member with a small thickness, while a grid structure 345 includes a predetermined member with a large thickness. Increasing the thickness of a predetermined member included in a grid structure increases the strength of the grid structure. The determination unit 204 changes at least one of the thickness and the density of the grid structure as design information based on the first estimation result obtained by the first estimation unit 202 and the second estimation result obtained by the second estimation unit 203 to determine the design information of the object with high accuracy.

FIG. 9 is a diagram illustrating examples of the curved surface structure. Specifically, FIG. 9 illustrates curved surface structures with different densities and thicknesses to form a periodic curved surface structure as an example.

The curved surface structures 351, 352, and 353 have low, medium, and high densities, respectively. Increasing the density of a curved surface structure increases the mass per unit volume, thereby increasing the strength of the curved surface structure.

A curved surface structure 354 includes a predetermined member with a small thicknesses, while a curved surface structure 355 includes a predetermined member with a large thickness. Increasing the thickness of a predetermined member included in a curved surface structure increases the strength of the curved surface structure. The determination unit 204 changes, as design information, at least one of the thickness and the density of each unit structure having the curved surface structure based on the first estimation result obtained by the first estimation unit 202 and the second estimation result obtained by the second estimation unit 203. In this way, the determination unit 204 determines the design information of the object with high accuracy.

Referring back to FIG. 4, the storage unit 205 stores learning data used by the learning unit 206 for learning. The learning data includes the shape data received by the input unit 201, the first estimation result obtained by the first estimation unit 202, and the second estimation result obtained by the second estimation unit 203.

The learning unit 206 generates a learned model based on the learning data read from the storage unit 205. The learning unit 206 may learn, from the learning data, a relationship between the shape of an object and the deformation of the object that is likely to occur during the manufacturing of the object to generate the learned model that estimates the deformation of an object that is likely to occur during the manufacturing of the object. The learning unit 206 may learn, from the learning data, a relationship between the shape of an object and the performance of the object that is likely to be exhibited during the use of the object to generate a learned model that estimates the performance of an object that is likely to be exhibited during the use of the object.

Any learning algorithm may be selected. Examples of the learning algorithm include deep learning using a neural network, unsupervised learning, supervised learning, and reinforcement learning.

The output unit 207 outputs design data of the object. The design data includes design information of each unit structure determined by the determination unit 204. The design data output from the output unit 207 is input to the manufacturing system 1. The design data includes, for example, the shape data. The manufacturing system 1 manufactures the object based on the input design data.

### Information Processing Method

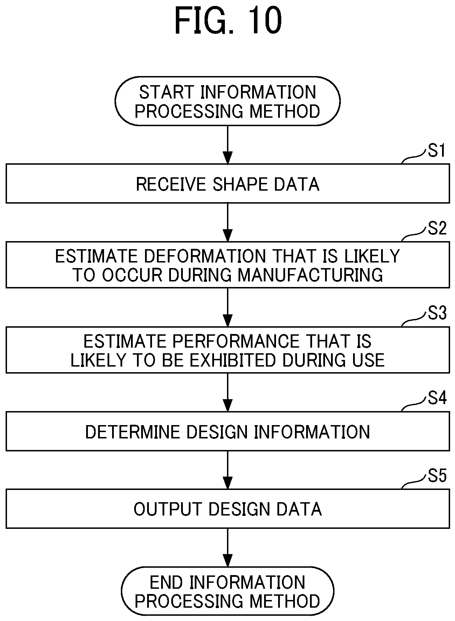

FIG. 10 is a flowchart illustrating an example of an information processing method according to a first embodiment. The information processing method is performed by the information processing apparatus 2. As illustrated in FIG. 10, the information processing method according to the present embodiment includes an input process S1, a first estimation process S2, a second estimation process S3, a determination process S4, and an output process S5.

In the input process S1, the input unit 201 of the information processing apparatus 2 receives an input of shape data indicating the shape of an object. The input unit 201 provides the shape data to the first estimation unit 202 and the second estimation unit 203.

In the first estimation process S2, the first estimation unit 202 of the information processing apparatus 2 estimates the deformation of the object that is likely to occur during the manufacturing of the object. The object includes at least a unit structure. Specifically, the first estimation unit 202 receives the shape data from the input unit 201. Next, the first estimation unit 202 estimates the deformation of the object that is likely to occur during the manufacturing of the object based on the shape data. As an example, the first estimation unit 202 may perform a sintering simulation based on the shape data and obtain a stress distribution during the sintering of the object. The first estimation unit 202 provides a first estimation result, which indicates the result of the estimation of the deformation of the object that is likely to occur during the manufacturing of the object, to the determination unit 204. As an example, the first estimation result may be a stress distribution during the sintering of the object.

In the second estimation process S3, the second estimation unit 203 of the information processing apparatus 2 estimates the performance of the object that is likely to be exhibited during the use of the object. First, the second estimation unit 203 receives the shape data from the input unit 201. Next, the second estimation unit 203 estimates the performance of the object that is likely to be exhibited during the use of the object based on the received shape data. As an example, the second estimation unit 203 may perform a structural analysis simulation based on the shape data to obtain a stress distribution during the use of the object. The second estimation unit 203 provides a second estimation result, which indicates the result of the estimation of the performance of the object that is likely to be exhibited during the use of the object, to the determination unit 204. As an example, the second estimation result may be a stress distribution during the use of the object.

In the determination process S4, the determination unit 204 of the information processing apparatus 2 determines design information of a partial structure based on the first estimation result obtained in the first estimation process S2 and the second estimation result obtained in the second estimation process S3. First, the determination unit 204 receives the first estimation result from the first estimation unit 202. The determination unit 204 also receives the second estimation result from the second estimation unit 203. Next, the determination unit 204 determines the design information of the object based on the first estimation result and the second estimation result.

Specifically, the determination unit 204 determines, based on the stress distribution during the sintering of the object, a region where deformation is likely to occur during the sintering of the object. The determination unit 204 also determines, based on the stress distribution during the use of the object, a region where deformation is likely to occur during the use of the object. Based on the determined regions, the determination unit 204 determines, as design information, at least one of the thickness and the density of each unit structure, which has a grid structure or a curved surface structure.

In one example, the determination unit 204 increases at least one of the thickness and the density of each unit structure included in a region where stress concentrates. In this case, the determination unit 204 may decrease at least one of the thickness and the density of each unit structure that is not included in the region where stress concentrates. This improves the strength of the region where deformation is likely to occur during the manufacturing or use of the object. The determination unit 204 provides the design information of each unit structure that has been determined to the output unit 207.

In the output process S5, the output unit 207 of the information processing apparatus 2 receives the design information of each partial structure from the determination unit 204. Next, the output unit 207 outputs design data including the design information of each unit structure determined in the determination process S4. The design data includes, for example, the shape data. The design data output from the output unit 207 is input to the manufacturing system 1. The manufacturing system 1 manufactures the object based on the input design data.

### Manufacturing Method

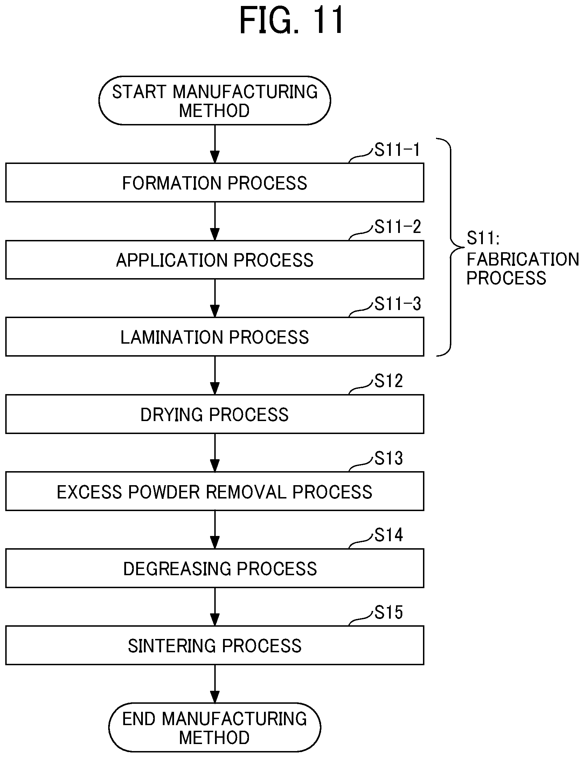

FIG. 11 is a flowchart illustrating an example of a manufacturing method. The manufacturing method is performed by the manufacturing system 1. As illustrated in FIG. 11, the manufacturing method includes a fabrication process S11, a drying process S12, an excess powder removal process S13, a degreasing process S14, and a sintering process S15.

In the fabrication process S11, the fabrication apparatus 100 of the manufacturing system 1 fabricates an object based on the design data generated by the information processing apparatus 2. The fabrication process S11 includes a formation process S11-1, an application process S11-2, and a lamination process S11-3.

In the formation process S11-1, the fabrication apparatus 100 forms a powder layer including powder. In the application process S11-2, the fabrication apparatus 100 applies fabrication liquid to the powder layer. This forms a fabrication layer. In the lamination process S11-3, the fabrication apparatus 100 repeats the formation process S11-1 and the application process S11-2 to laminate a plurality of fabrication layers, thereby fabricating a fabrication object, which is an example of an object.

In the drying process S12, the drying apparatus 110 of the manufacturing system 1 dries the fabrication object fabricated in the fabrication process S11. The drying apparatus 110 heats the fabrication object. Accordingly, a liquid component such as solvent remaining in the fabrication object is vaporized and removed from the fabrication object.

In the excess powder removal process S13, the excess powder removal apparatus 120 of the manufacturing system 1 removes excess powder adhering to the fabrication object.

In the degreasing process S14, the sintering apparatus 130 of the manufacturing system 1 degreases the fabrication object. The sintering apparatus 130 heats the fabrication object in an atmosphere including an inert gas. This removes a resin from the fabrication object, thereby forming a degreased body.

In the sintering process S15, the sintering apparatus 130 of the manufacturing system 1 sinters the fabrication object, thereby obtaining a sintered body with the degreased body sintered.

The information processing apparatus 2 according to the first embodiment determines design information of an object including at least a unit structure based on a first estimation result and a second estimation result. The first estimation result indicates a result of the estimation of the deformation of the object that is likely to occur during the manufacturing of the object. The second estimation result indicates a result of the estimation of the performance of the object that is likely to be exhibited during the use of the object. According to the present embodiment, the information processing apparatus 2 determines the design information of the object with high accuracy, taking into account both the deformation of the object that is likely to occur during the manufacturing of the object and the performance of the object that is likely to be exhibited during the use of the object.

Each unit structure may have a grid structure or a curved surface structure. The design information may include at least one of the thickness and the density of each unit structure. According to the present embodiment, the design information of an object including a grid structure or a curved surface structure is determined with high accuracy.

The information processing apparatus 2 may estimate the deformation of an object that is likely to occur during the manufacturing of the object based on a stress distribution during the sintering of the object. According to the present embodiment, the information processing apparatus 2 designs the object, taking into account the deformation of the object that is likely to occur during the sintering of the object.

The information processing apparatus 2 may estimate the deformation of an object that is likely to occur during the manufacturing of the object based on the maximum principal stress indicated in a stress distribution during the sintering of the object. During the sintering of the object, a tensile stress is mainly applied to the object. Therefore, the information processing apparatus 2 obtains a reasonable result by taking into account the maximum principal stress. According to the present embodiment, the information processing apparatus 2 may take into account the maximum principal stress so that a calculation for estimating the deformation of the object that is likely to occur during the manufacturing of the object is simplified.

The stress distribution during the sintering of the object may be a stress distribution when a material of the object includes aluminum or an aluminum alloy as powder. Aluminum tends to deform significantly during sintering, which makes sintering difficult. According to the present embodiment, even when the object includes aluminum or an aluminum alloy with which sintering is difficult, the information processing apparatus 2 designs the object taking into account the deformation of the object that is likely to occur during the sintering of the object.

The stress distribution during the sintering of the object may be a stress distribution in a temperature range in which at least part of aluminum is in the liquid phase. Since the temperature is not constant during sintering, the physical property of the object also changes from moment to moment. Aluminum becomes the liquid phase at a high temperature. While aluminum is in the liquid phase, shrinkage particularly progresses, causing a significant deformation. According to the present embodiment, the information processing apparatus 2 designs the object taking into account the deformation in the temperature range in which at least part of aluminum is in the liquid phase in which deformation is likely to occur.

The information processing apparatus 2 may estimate the performance of the object that is likely to be exhibited during the use of the object based on a stress distribution during the use of the object. According to the present embodiment, the information processing apparatus 2 designs the object taking into account the deformation of the object that is likely to occur during the use of the object.

### Second Embodiment

In the first embodiment, the information processing apparatus 2 determines design information of an object based on both a result of the estimation of the deformation of the object that is likely to occur during the manufacturing of the object and a result of the estimation of the performance of the object that is likely to be exhibited during the use of the object. In a second embodiment, the information processing apparatus 2 determines design information of an object based on a result of the estimation of the deformation of the object that is likely to occur during the manufacturing of the object. Subsequently, the information processing apparatus 2 determines the design information of the object again based on a result of the estimation of the performance of the object that is likely to be exhibited during the use of the object.

In the second embodiment, the description focuses on the differences from the first embodiment, omitting the description of contents that overlap with the description of the first embodiment as appropriate.

### Information Processing Method

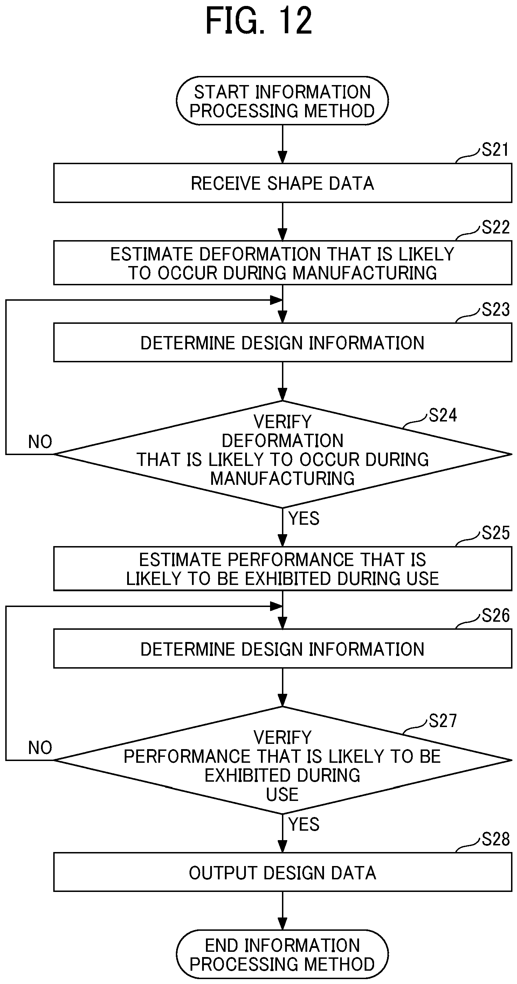

FIG. 12 is a flowchart illustrating an example of an information processing method according to the second embodiment. As illustrated in FIG. 12, the information processing method according to the present embodiment includes an input process S21, a first estimation process S22, a first determination process S23, a first verification process S24, a second estimation process S25, a second determination process S26, a second verification process S27, and an output process S28.

In the input process S21, the input unit 201 of the information processing apparatus 2 receives an input of shape data indicating the shape of an object. The input unit 201 provides the shape data to the first estimation unit 202.

In the first estimation process S22, the first estimation unit 202 of the information processing apparatus 2 estimates the deformation of the object that is likely to occur during the manufacturing of the object. The object includes at least a unit structure. Specifically, the first estimation unit 202 receives the input of the shape data from the input unit 201. Next, the first estimation unit 202 estimates the deformation of the object that is likely to occur during the manufacturing of the object based on the received shape data. The first estimation unit 202 provides a first estimation result, which indicates a result of the estimation of the deformation of the object that is likely to occur during the manufacturing of the object, to the determination unit 204.

In the first determination process S23, the determination unit 204 of the information processing apparatus 2 receives the first estimation result from the first estimation unit 202. The determination unit 204 then determines design information of the object based on the first estimation result obtained in the first estimation process S22. The determination unit 204 provides the design information of the object that has been determined to the first estimation unit 202.

In the first verification process S24, the first estimation unit 202 of the information processing apparatus 2 receives the design information of the object from the determination unit 204. The first estimation unit 202 then generates design data including the design information of the object determined in the first determination process S23. The first estimation unit 202 then estimates the deformation of the object that is likely to occur during the manufacturing of the object based on the generated design data.

The first estimation unit 202 determines whether or not the design data is appropriate based on the result of the estimation of the deformation of the object that is likely to occur during the manufacturing of the object. In one example, the first estimation unit 202 determines whether or not the maximum value of the maximum principal stress in a stress distribution during sintering, which has been obtained by sintering simulation, is equal to or less than a first threshold value. In this case, the first threshold value may be set in advance to a value under which the amount of deformation of the object that occurs during sintering has been experimentally confirmed to stay within an acceptable range. The first threshold value may be set considering a predetermined safety factor. When the maximum value of the maximum principal stress is equal to or less than the first threshold value, the first estimation unit 202 determines that the design data is appropriate since the amount of deformation of the object during sintering is to stay within the acceptable range.

When the first estimation unit 202 determines that the design data is appropriate (YES in the first verification process S24), the first estimation unit 202 provides the design data to the second estimation unit 203 and the processing proceeds to the second estimation process S25. When the first estimation unit 202 determines that the design data is not appropriate (NO in the first verification process S24), the first estimation unit 202 notifies the determination unit 204 that the design data is not appropriate and the processing returns to the first determination process S23.

In the second estimation process S25, the second estimation unit 203 of the information processing apparatus 2 receives the design data from the first estimation unit 202. The second estimation unit 203 then estimates the performance of the object that is likely to be exhibited during the use of the object based on the received design data. The second estimation unit 203 provides a second estimation result, which is a result of the estimation of the performance of the object that is likely to be exhibited during the use of the object, to the determination unit 204.

In the second determination process S26, the determination unit 204 of the information processing apparatus 2 receives the second estimation result from the second estimation unit 203. Next, the determination unit 204 determines design information of the object based on the second estimation result obtained in the second estimation process S25. The determination unit 204 provides the design information of the object that has been determined to the second estimation unit 203.

In the second verification process S27, the second estimation unit 203 of the information processing apparatus 2 receives the design information of the object from the determination unit 204. Next, the second estimation unit 203 generates design data including the design information of the object determined in the second determination process S26. Subsequently, the second estimation unit 203 estimates the performance of the object that is likely to be exhibited during the use of the object based on the generated design data.

The second estimation unit 203 determines whether or not the design data is appropriate based on the result of the estimation of the performance of the object that is likely to be exhibited during the use of the object. In one example, the second estimation unit 203 determines whether or not the maximum value of the maximum principal stress in a stress distribution during the use of the object, which has been obtained by structural analysis simulation, is equal to or less than a second threshold value. In this case, the second threshold value may be set in advance to a value under which the amount of deformation of the object that occurs during the use of the object has been experimentally confirmed to stay within an acceptable range. The second threshold value may be set considering a predetermined safety factor. When the maximum value of the maximum principal stress is equal to or less than the second threshold value, the second estimation unit 203 determines that the design data is appropriate since the amount of deformation of the object during the use of the object is to stay within the acceptable range.

When the second estimation unit 203 determines that the design data is appropriate (YES in the second verification process S27), the second estimation unit 203 provides the design data to the output unit 207 and the processing proceeds to the output process S28. When the second estimation unit 203 determines that the design data is not appropriate (NO in the second verification process S27), the second estimation unit 203 notifies the determination unit 204 that the design data is not appropriate and the processing returns to the second determination process S26.

In the output process S28, the output unit 207 of the information processing apparatus 2 receives design information of the object from the determination unit 204. Next, the output unit 207 outputs design data including the design information of the object determined in the second determination process S26. The design data includes, for example, the shape data. The design data output from the output unit 207 is input to the manufacturing system 1.

In the example of FIG. 12, the series of processes from the first estimation process S22 to the second verification process S27 is performed once. In another example, the series of processes from the first estimation process S22 to the second verification process S27 may be performed repeatedly a plurality of times. As an example, in the second verification process S27, when the second estimation unit 203 determines that the design data is appropriate (YES in the second verification process S27), the processing may return to the first estimation process S22. The number of repetitions of the series of processes may be predetermined. Alternatively, the series of processes may be repeated until the amount of change in the design information of each partial structure becomes equal to or less than a predetermined threshold value.

The information processing apparatus 2 according to the second embodiment performs, as a series of processes, the first estimation process, the determination process, the second estimation process, and the determination process in this order at least once. According to the present embodiment, the information processing apparatus 2 designs an object taking into account the deformation of the object that is likely to occur during the manufacturing of the object. After that, the information processing apparatus 2 designs the object again taking into account the deformation of the object that is likely to occur during the use of the object. Accordingly, the information processing apparatus 2 determines the design information of the object with high accuracy. Moreover, it is ensured that the information processing apparatus 2 designs the object taking into account both the deformation of the object that is likely to occur during the manufacturing of the object and the deformation of the object that is likely to occur during the use of the object.

### Third Embodiment

In the second embodiment, the information processing apparatus 2 determines design information of an object based on a result of the estimation of the deformation of the object that is likely to occur during the manufacturing of the object. After that, the information processing apparatus 2 determines the design information of the object again based on a result of the estimation of the performance of the object that is likely to be exhibited during the use of the object. In a third embodiment, the information processing apparatus 2 determines design information of an object based on a result of the estimation of the performance of the object that is likely to be exhibited during the use of the object. After that, the information processing apparatus 2 determines the design information of the object again based on a result of the estimation of the deformation of the object that is likely to occur during the manufacturing of the object.

In the third embodiment, the description focuses on the differences from the second embodiment.

### Information Processing Method

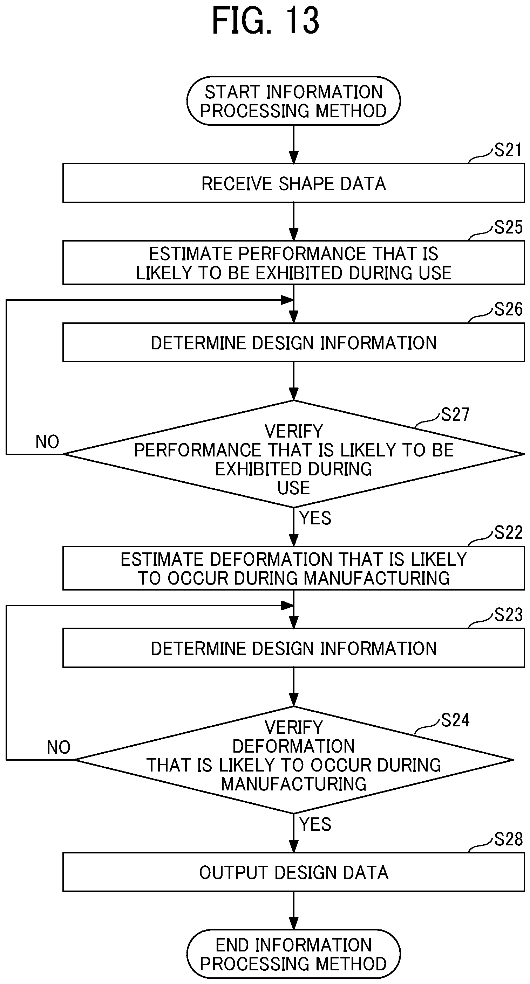

FIG. 13 is a flowchart illustrating an example of an information processing method according to the third embodiment. As illustrated in FIG. 13, the information processing method according to the present embodiment includes the input process S21, the second estimation process S25, the second determination process S26, the second verification process S27, the first estimation process S22, the first determination process S23, the first verification process S24, and the output process S28.

The information processing method according to the third embodiment differs from the information processing method according to the second embodiment in that the second estimation process S25 to the second verification process S27 are performed, after which the first estimation process S22 to the first verification process S24 are performed.

In the example of FIG. 13, a series of processes from the second estimation process S25 to the first verification process S24 is performed once. In another example, the series of processes from the second estimation process S25 to the first verification process S24 may be performed repeatedly a plurality of times. A method of repeating the series of processes may be similar to the method described in the second embodiment. Specifically, when the first estimation unit 202 determines that design data is appropriate (YES in the first verification process S24), the processing may return to the second estimation process S25.

The information processing apparatus 2 according to the third embodiment performs, as a series of processes, the second estimation process, the determination process, the first estimation process, and the determination process in this order at least once. According to the present embodiment, the information processing apparatus 2 determines design information of an object with high accuracy. Specifically, the information processing apparatus 2 designs an object taking into account the deformation of the object that is likely to occur during the use of the object. After that, the information processing apparatus 2 designs the object again taking into account the deformation of the object that is likely to occur during the manufacturing of the object. Moreover, it is ensured that the information processing apparatus 2 designs the object taking into account both the deformation of the object that is likely to occur during the use of the object and the deformation of the object that is likely to occur during the manufacturing of the object.

### Fourth Embodiment

In the first embodiment, the information processing apparatus 2 determines design information of an object based on both a result of the estimation of the deformation of the object that is likely to occur during the manufacturing of the object and a result of the estimation of the performance of the object that is likely to be exhibited during the use of the object. In a fourth embodiment, the information processing apparatus 2 determines design information of an object based on a result of the integration of a result of the estimation of the deformation of the object that is likely to occur during the manufacturing of the object and a result of the estimation of the performance of the object that is likely to be exhibited during the use of the object.

In the fourth embodiment, the description focuses on the differences from the first embodiment.

### Information Processing Method

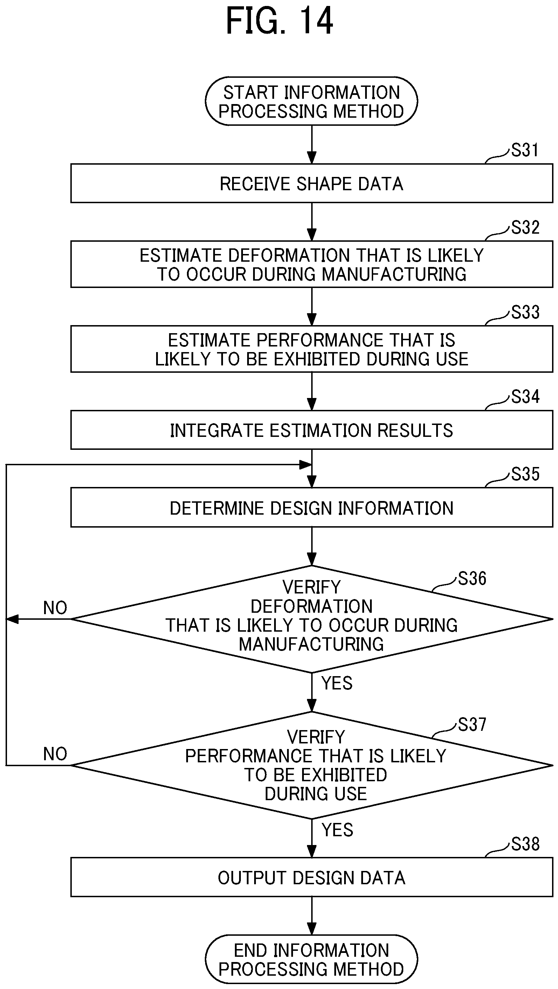

FIG. 14 is a flowchart illustrating an example of an information processing method according to the fourth embodiment. As illustrated in FIG. 14, the information processing method according to the present embodiment includes an input process S31, a first estimation process S32, a second estimation process S33, an integration process S34, a determination process S35, a first verification process S36, a second verification process S37, and an output process S38.

In the input process S31, the input unit 201 of the information processing apparatus 2 receives an input of shape data indicating the shape of an object. The input unit 201 provides the shape data to the first estimation unit 202 and the second estimation unit 203.

In the first estimation process S32, the first estimation unit 202 of the information processing apparatus 2 receives the shape data from the input unit 201. Next, the first estimation unit 202 estimates the deformation of the object that is likely to occur during the manufacturing of the object based on the received shape data. The first estimation unit 202 provides a first estimation result, which indicates a result of the estimation of the deformation of the object that is likely to occur during the manufacturing of the object, to the determination unit 204.

In the second estimation process S33, the second estimation unit 203 of the information processing apparatus 2 receives the shape data from the input unit 201. The second estimation unit 203 then estimates the performance of the object that is likely to be exhibited during the use of the object based on the received shape data. The second estimation unit 203 provides a second estimation result, which is a result of the estimation of the performance of the object that is likely to be exhibited during the use of the object, to the determination unit 204.

In the integration process S34, the determination unit 204 of the information processing apparatus 2 receives the first estimation result from the first estimation unit 202. The determination unit 204 also receives the second estimation result from the second estimation unit 203. The determination unit 204 then integrates the first estimation result and the second estimation result with each other.

In one example, the determination unit 204 may add a stress distribution during the sintering of the object and a stress distribution during the use of the object to integrate the first estimation result and the second estimation result. Adding the stress distribution during the sintering of the object and the stress distribution during the use of the object may be, for example, an operation of generating a distribution in which stresses at the identical positions in the two stress distributions are added.

The determination unit 204 may normalize a stress distribution during the sintering of an object and a stress distribution during the use of the object and then add the normalized stress distributions. In one example, the determination unit 204 may normalize the stress distribution during the sintering of the object and the stress distribution during the use of the object in the range of 1 to 5 and then add the normalized stress distributions. A stress distribution generated by adding these two stress distributions is a stress distribution that has been normalized in the range of 1 to 10.

The determination unit 204 may obtain a weighted sum of a stress distribution during the sintering of an object and a stress distribution during the use of the object. The weight to be applied to the stress distribution during the sintering of the object and the stress distribution during the use of the object may be set in advance. The weight is information for controlling whether importance is given more to the deformation of the object that is likely to occur during the sintering of the object or to the performance of the object that is likely to be exhibited during the use of the object.

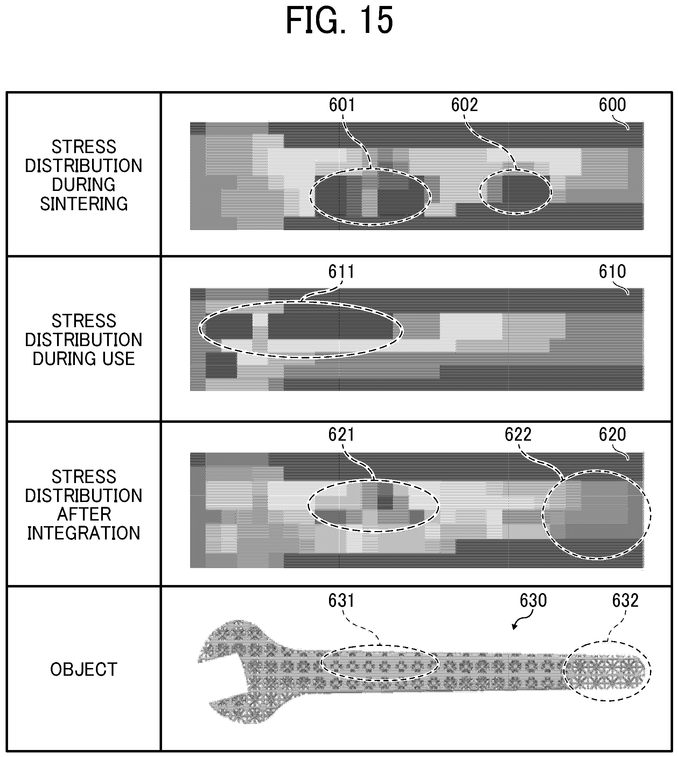

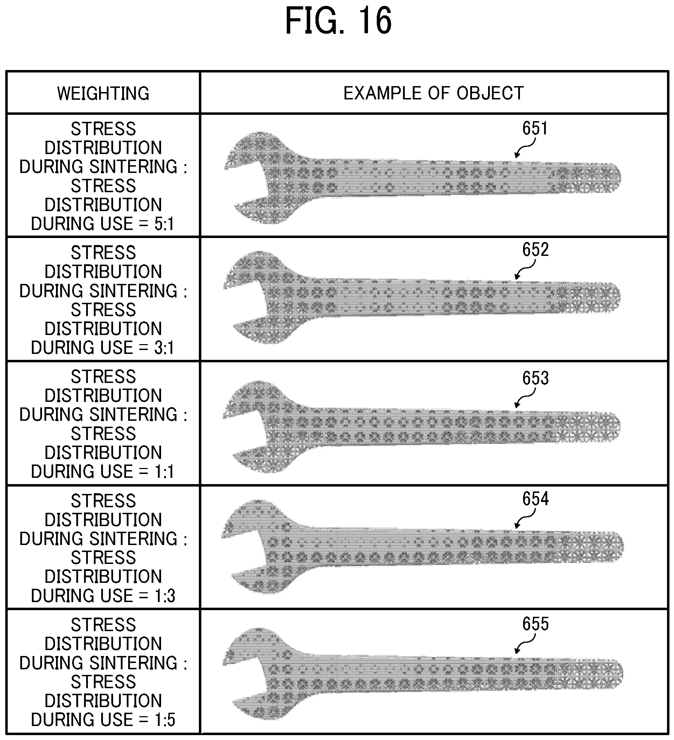

In one example, when the weight of the stress distribution during the sintering of the object is set to 1 and the weight of the stress distribution during the use of the object is set to 1, the object is designed such that the deformation of the object that is likely to occur during the sintering of the object and the deformation of the object that is likely to occur during the use of the object are substantially equally taken into consideration. When the weight of the stress distribution during the sintering of the object is set to 5 and the weight of the stress distribution during the use of the object is set to 1, the object is designed such that importance is given more to the deformation of the object that is likely occur during the sintering of the object than to the deformation of the object that is likely to occur during the use of the object. When the weight of the stress distribution during the sintering of the object is set to 1 and the weight of the stress distribution during the use of the object is set to 5, the object is designed such that importance is given more to the deformation of the object that is likely to occur during the use of the object than to the deformation of the object that is likely to occur during the sintering of the object. The stress distribution is described below with reference to FIG. 15. The weight of the stress distribution is described with reference to FIG. 16.

FIG. 15 is a diagram illustrating examples of a stress distribution according to the fourth embodiment. Specifically, FIG. 15 illustrates a stress distribution 600 during the sintering of an object, a stress distribution 610 during the use of the object, a stress distribution 620 after integration, and an object 630. The stress distribution 600 during the sintering of the object is obtained by normalizing a stress distribution during the sintering of the object to a value of 1 or greater and 5 or less. The stress distribution 610 during the use of the object is obtained by normalizing a stress distribution during the use of the object to a value of 1 or greater and 5 or less. The stress distribution 620 after integration is obtained by adding the stress distribution 600 during the sintering of the object and the stress distribution 610 during the use of the object.

The stress distribution 600 during the sintering of the object indicates regions 601 and 602 where the stress is high. The stress distribution 610 during the use of the object indicates a region 611 where the stress is high. The stress distribution 620 after integration indicates a region 621 where the stress is high and a region 622 where the stress is low. The region 621 where the stress is high is a region where the stress is high both in the stress distribution 600 during the sintering of the object and the stress distribution 610 during the use of the object. The region 622 where the stress is low is a region where the stress is low both in the stress distribution 600 during the sintering of the object and the stress distribution 610 during the use of the object.

The object 630 is an object for which design information has been determined based on the stress distribution 620 after integration. The object 630 includes a partial structure 631 with a high density and a partial structure 632 with a low density. Since the stress distribution 620 after integration is obtained by adding the stress distribution during the sintering of the object and the stress distribution during the use of the object, the determination unit 204 determines a region where the stress concentrates both in the stress distribution during the sintering of the object and the stress distribution during the use of the object. Accordingly, the determination unit 204 determines the design information of the object with high accuracy.

FIG. 16 is a diagram illustrating examples of an object according to the fourth embodiment. FIG. 16 illustrates objects 651, 652, 653, 654, and 655. The design information of each of the objects 651, 652, 653, 654, and 655 has been determined based on a distribution obtained by adding stress distributions with different weights.

The object 651 is obtained by setting the weight of a stress distribution during the sintering of the object to 5 and the weight of a stress distribution during the use of the object to 1. The object 652 is obtained by setting the weight of the stress distribution during the sintering of the object to 3 and the weight of the stress distribution during the use of the object to 1. The object 653 is obtained by setting the weight of the stress distribution during the sintering of the object to 1 and the weight of the stress distribution during the use of the object to 1. The object 654 is obtained by setting the weight of the stress distribution during the sintering of the object to 1 and the weight of the stress distribution during the use of the object to 3. The object 655 is obtained by setting the weight of the stress distribution during the sintering of the object to 1 and the weight of the stress distribution during the use of the object to 5.

The information processing apparatus differentiates the weight of the stress distribution during the sintering of the object and the weight of the stress distribution during the use of the object so that depending on whether importance is given more to the deformation during the sintering of the object or to the deformation during the use of the object, the design information of the object changes accordingly. Accordingly, the information processing apparatus 2 determines the design information of the object with high accuracy.

Referring back to FIG. 14, in the determination process S35, the determination unit 204 of the information processing apparatus 2 determines design information of the object based on the result of the integration in the integration process S34. The determination unit 204 provides the design information of the object that has been determined to the first estimation unit 202 and the second estimation unit 203.

Specifically, the determination unit 204 determines a region where the stress concentrates (in other words, a region where deformation is likely to occur) based on the result of the integration. The determination unit 204 then determines at least one of the thickness and the density of each unit structure based on the distribution of the region where the stress concentrates.

In the first verification process S36, the first estimation unit 202 of the information processing apparatus 2 receives the design information of the object from the determination unit 204. The first estimation unit 202 then generates design data including the design information of the object determined in the determination process S35. The first estimation unit 202 then estimates, based on the generated design data, the deformation of the object that is likely to occur during the manufacturing of the object.

The first estimation unit 202 determines whether or not the design data is appropriate based on the result of the estimation of the deformation of the object that is likely to occur during the manufacturing of the object. When the first estimation unit 202 determines that the design data is appropriate (YES in the first verification process S36), the first estimation unit 202 provides the design data to the second estimation unit 203 and the processing proceeds to the second verification process S37. When the first estimation unit 202 determines that the design data is not appropriate (NO in the first verification process S36), the first estimation unit 202 notifies the determination unit 204 that the design data is not appropriate and the processing returns to the determination process S35.

In the second verification process S37, the second estimation unit 203 of the information processing apparatus 2 receives the design data from the first estimation unit 202. Next, the second estimation unit 203 estimates the performance of the object that is likely to be exhibited during the use of the object based on the received design data.

The second estimation unit 203 determines whether or not the design data is appropriate based on the result of the estimation of the performance during the use of the object. When the second estimation unit 203 determines that the design data is appropriate (YES in the second verification process S37), the second estimation unit 203 provides the design data to the output unit 207 and the processing proceeds to the output process S38. When the second estimation unit 203 determines that the design data is not appropriate (NO in the second verification process S37), the second estimation unit 203 notifies the determination unit 204 that the design data is not appropriate and the processing returns to the determination process S35.

In the output process S38, the output unit 207 of the information processing apparatus 2 receives the design information of the object from the determination unit 204. The output unit 207 then outputs the design data including the design information of the object determined in the determination process S35. The design data includes, for example, the shape data. The design data output from the output unit 207 is input to the manufacturing system 1.

The information processing apparatus 2 according to the fourth embodiment determines design information of each partial structure based on a result of the integration of a first estimation result and a second estimation result. The information processing apparatus 2 may add a stress distribution during the sintering of an object and a stress distribution during the use of the object to integrate the first estimation result and the second estimation result. Accordingly, according to the present embodiment, the information processing apparatus 2 determines the design information of the object with high accuracy. Moreover, the information processing apparatus 2 shortens the time taken to design the object by using one estimation result obtained by integrating the first estimation result and the second estimation result.

The information processing apparatus 2 may normalize a stress distribution during the sintering of an object and a stress distribution during the use of the object and then add the normalized stress distributions. Alternatively, the information processing apparatus 2 may obtain a weighted sum of a stress distribution during the sintering of an object and a stress distribution during the use of the object. According to the present embodiment, the information processing apparatus 2 takes into account the deformation of the object that is likely to occur during the manufacturing of the object and the performance of the object that is likely to be exhibited during the use of the object by appropriately weighting a stress distribution during the manufacturing of the object and a stress distribution during the use of the object.

### Performance Evaluation

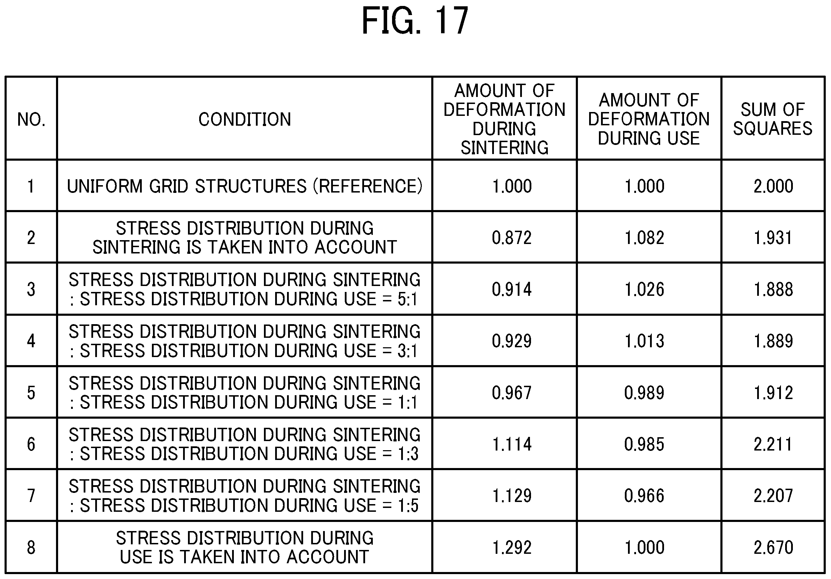

FIG. 17 is a table illustrating an example of a performance evaluation result according to the fourth embodiment. FIG. 17 illustrates, for each of the objects obtained under various conditions, the sum of squares as a result of calculating the amount of deformation of an object that is likely to occur during the manufacturing of the object and the amount of deformation of the object that is likely to occur during the use of the object.

The conditions are as follows. The structure (1) indicates uniform grid structures. The structure (2) indicates grid structures obtained by taking into account a stress distribution during the sintering of an object. The structure (3) indicates grid structures obtained by setting the weight of a stress distribution during the sintering of an object to 5 and the weight of a stress distribution during the use of the object to 1. The structure (4) indicates grid structures obtained by setting the weight of a stress distribution during the sintering of an object to 3 and the weight of a stress distribution during the use of the object to 1. The structure (5) indicates grid structures obtained by setting the weight of a stress distribution during the sintering of an object to 1 and the weight of a stress distribution during the use of the object to 1. The structure (6) indicates grid structures obtained by setting the weight of a stress distribution during the sintering of an object to 1 and the weight of a stress distribution during the use of the object to 3. The structure (7) indicates grid structures obtained by setting the weight of a stress distribution during the sintering of an object to 1 and the weight of a stress distribution during the use of the object to 5. The structure (8) indicates grid structures obtained by taking into account a stress distribution during the use of an object. The uniform grid structures (1) serve as a reference condition for evaluation.

In the case of the uniform grid structures (1), a partial structure has uniform density and thickness. In the case of the grid structures (2) obtained by taking into account a stress distribution during the sintering of an object, the density and thickness of a partial structure are determined based on the stress distribution during the sintering of the object. In the case of the grid structures (8) obtained by taking into account a stress distribution during the use of an object, the density and thickness of a partial structure are determined based on the stress distribution during the use of the object. The structures (3) to (7) are examples corresponding to the examples of FIG. 16 in the fourth embodiment.

The amount of deformation of an object that is likely to occur during the manufacturing of the object and the amount of deformation of the object that is likely to occur during the use of the object are calculated by simulation. FIG. 17 illustrates the results of the conversion of the amount of deformation of the structures (2) to (8) when the amount of deformation of the uniform grid structures (1) is set to 1.

In one example, a plurality of structures may be generated with different weights and then an appropriate structure may be selected based on the result of evaluating the deformation or performance of each of the plurality of structures. In this case, the selection criterion may be determined as desired. For example, the structure (3) may be selected as a structure with which a total (sum of squares) of the amount of deformation of an object that is likely to occur during the sintering of the object and the amount of deformation of the object that is likely to occur during the use of the object is the smallest. Alternatively, the structure (5) may be selected as a structure with which the amount of deformation of an object that is likely to occur during the sintering of the object and the amount of deformation of the object that is likely to occur during the use of the object are smaller than those of the structure (1). Alternatively, the structure (5) may be selected as a structure with which the amount of deformation of an object during the sintering of the object is the smallest among the structures with which the amount of deformation of an object that is likely to occur during the use of the object is smaller than that of the structure (1).

The example illustrated in FIG. 17 is an example of the evaluation results of the objects having the shape of a wrench. Since the amount of deformation for each weight varies depending on the shape or the use of an object, an appropriate weight also varies depending on the object.

The illustrated apparatuses are only illustrative of one of several computing environments for implementing the embodiments disclosed herein. For example, in some embodiments, the information processing apparatus 2 includes a plurality of computing devices, e.g., a server cluster, that are configured to communicate with each other over any type of communications link, including a network, a shared memory, etc. to collectively perform the processing disclosed herein.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

### Aspects of the present disclosure are, for example, as follows.

### Aspect 1

According to Aspect 1, an information processing method is performed by an information processing apparatus and includes estimating deformation of an object that is likely to occur during manufacturing of the object, the object at least including a unit structure, estimating performance of the object that is likely to be exhibited during use of the object, and determining design information of the object based on a first estimation result and a second estimation result. The first estimation result is obtained by the estimating of the deformation. The second estimation result is obtained by the estimating of the performance.

### Aspect 2

According to Aspect 2, in the information processing method of Aspect 1, the unit structure has a grid structure or a curved surface structure.

### Aspect 3

According to Aspect 3, in the information processing method of Aspect 1 or 2, the design information includes at least one of a thickness and a density of the unit structure.

### Aspect 4

According to Aspect 4, in the information processing method of any one of Aspects 1 to 3, the estimating of the deformation includes obtaining a stress distribution during sintering of the object.

### Aspect 5

According to Aspect 5, in the information processing method of Aspect 4, the estimating of the deformation includes obtaining a stress distribution indicating a maximum principal stress during the sintering of the object.

### Aspect 6

According to Aspect 6, in the information processing method of Aspect 4 or 5, the stress distribution during the sintering of the object includes a stress distribution when a material of the object includes aluminum or an aluminum alloy.

### Aspect 7

According to Aspect 7, in the information processing method of Aspect 6, the stress distribution during the sintering of the object includes a stress distribution in a temperature range in which at least part of the aluminum is in a liquid phase.

### Aspect 8

According to Aspect 8, in the information processing method of any one of Aspects 1 to 3, the estimating of the performance includes obtaining a stress distribution during the use of the object.

### Aspect 9

According to Aspect 9, in the information processing method of any one of Aspects 1 to 8, the estimating of the deformation, the determining of the design information, the estimating of the performance, and the determining of the design information are performed as a series of processes in this order at least once.

### Aspect 10

According to Aspect 10, in the information processing method of any one of Aspects 1 to 8, the estimating of the performance, the determining of the design information, the estimating of the deformation, and the determining of the design information are performed as a series of processes in this order at least once.

### Aspect 11

According to Aspect 11, in the information processing method of any one of Aspects 1 to 10, the determining of the design information includes determining the design information based on a result of integration of the first estimation result and the second estimation result.

### Aspect 12

According to Aspect 12, in the information processing method of Aspect 11, the determining of the design information includes adding a stress distribution during sintering of the object and a stress distribution during the use of the object to integrate the first estimation result and the second estimation result.

### Aspect 13

According to Aspect 13, in the information processing method of Aspect 12, the determining of the design information includes normalizing and adding the stress distribution during the sintering of the object and the stress distribution during the use of the object.

### Aspect 14

According to Aspect 14, in the information processing method of Aspect 12 or 13, the determining of the design information includes obtaining a weighted sum of the stress distribution during the sintering of the object and the stress distribution during the use of the object.

### Aspect 15

According to Aspect 15, an object manufacturing method includes estimating, by a computer, deformation of an object that is likely to occur during manufacturing of the object, the object at least including a unit structure, estimating, by the computer, performance of the object that is likely to be exhibited during use of the object, determining, by the computer, design information of the object based on an estimation result obtained by the estimating of the deformation and an estimation result obtained by the estimating of the performance, repeating a formation process and an application process to fabricate the object, and sintering the object. The formation process includes forming a powder layer including powder based on design data including the design information of the object. The application process includes applying fabrication liquid to the powder layer.

### Aspect 16

According to Aspect 16, in the object manufacturing method of Aspect 15, the powder includes at least aluminum or an aluminum alloy.

### Aspect 17

According to Aspect 17, an information processing apparatus includes a first estimation unit, a second estimation unit, and a determination unit. The first estimation unit estimates deformation of an object that is likely to occur during manufacturing of the object. The object includes a partial structure in which a plurality of unit structures is coupled to each other. The second estimation unit estimates performance of the object that is likely to be exhibited during use of the object. The determination unit determines design information of the partial structure based on a first estimation result obtained by the first estimation unit and a second estimation result obtained by the second estimation unit.

### Aspect 18

According to Aspect 18, a program causes an information processing apparatus to perform a method. The method includes estimating deformation of an object that is likely to occur during manufacturing of the object, the object including a partial structure in which a plurality of unit structures is coupled to each other, estimating performance of the object that is likely to be exhibited during use of the object, and determining design information of the partial structure based on a first estimation result and a second estimation result. The first estimation result is obtained by the estimating of the deformation. The second estimation result is obtained by the estimating of the performance.

## Claims

1. An information processing method comprising:
estimating (S2) deformation of an object that is likely to occur during manufacturing of the object to obtain a first estimation result, the object including a unit structure;
estimating (S3) performance of the object that is likely to be exhibited during use of the object to obtain a second estimation result; and
determining (S4) design information of the object based on the first estimation result and the second estimation result.

2. The information processing method according to claim 1, wherein the unit structure has a grid structure or a curved surface structure.

3. The information processing method according to claim 1 or 2, wherein the design information includes at least one of a thickness and a density of the unit structure.

4. The information processing method according to any one of claims 1 to 3,
wherein the estimating (S2) of the deformation includes obtaining a stress distribution during sintering of the object.

5. The information processing method according to claim 4, wherein the estimating (S2) of the deformation includes obtaining a stress distribution indicating a maximum principal stress during the sintering of the object.

6. The information processing method according to any one of claims 1 to 5,
wherein the estimating (S3) of the performance includes obtaining a stress distribution during the use of the object.

7. The information processing method according to any one of claims 1 to 6,
wherein the estimating (S2) of the deformation, the determining (S4) of the design information, the estimating (S3) of the performance, and the determining (S4) of the design information are performed as a series of processes in this order at least once.

8. The information processing method according to any one of claims 1 to 6,
wherein the estimating (S3) of the performance, the determining (S4) of the design information, the estimating (S2) of the deformation, and the determining (S4) of the design information are performed as a series of processes in this order at least once.

9. The information processing method according to any one of claims 1 to 6,
wherein the determining (S4) of the design information includes determining the design information based on a result of integration of the first estimation result and the second estimation result.

10. The information processing method according to claim 9, wherein the determining (S4) of the design information includes adding a stress distribution during sintering of the object and a stress distribution during the use of the object to integrate the first estimation result and the second estimation result.

11. The information processing method according to claim 10, wherein the determining (S4) of the design information includes normalizing and adding the stress distribution during the sintering of the object and the stress distribution during the use of the object.

12. The information processing method according to claim 10, wherein the determining (S4) of the design information includes obtaining a weighted sum of the stress distribution during the sintering of the object and the stress distribution during the use of the object.

13. An information processing apparatus for performing the method of any one of claims 1 to 12.
a first estimation unit (202) configured to estimate deformation of an object that is likely to occur during manufacturing of the object to obtain a first estimation result, the object including a unit structure;
a second estimation unit (203) configured to estimate performance of the object that is likely to be exhibited during use of the object to obtain a second estimation result; and
a determination unit (204) configured to determine design information of the object based on the first estimation result and the second estimation result.

14. A manufacturing method, comprising:
estimating (S2) deformation of an object that is likely to occur during manufacturing of the object to obtain a first estimation result, the object including a unit structure;
estimating (S3) performance of the object that is likely to be exhibited during use of the object to obtain a second estimation result;
determining (S4) design information of the object based on the first estimation result and the second estimation result;
repeating (S11) a formation process and an application process to fabricate the object, the formation process including forming a powder layer including powder based on design data including the design information of the object, the application process including applying fabrication liquid to the powder layer; and
sintering (S15) the object.

15. The object manufacturing method according to claim 14, wherein the powder includes at least aluminum or an aluminum alloy.
